# EUROPÄISCHE PATENTSCHRIFT

(11) **EP 4 570 540 B1**
(45) Veröffentlichungstag und Bekanntmachung des Hinweises auf die Patenterteilung: **15.04.2026**
(21) Anmeldenummer: 24220015.2
(22) Anmeldetag: 14.12.2024
(51) Int. Cl.: B60H 1/00, B60H 1/24, B60H 1/26

(54) **DACHLUKENLÜFTERVORRICHTUNG**
ROOF HATCH FAN DEVICE
DISPOSITIF DE VENTILATEUR DE TRAPPE DE TOIT

(30) Priorität: 15.12.2023 LU 103229; 03.05.2024 LU 103291
(43) Veröffentlichungstag der Anmeldung: 18.06.2025
(73) Patentinhaber: KCT GmbH & Co. KG, 72348 Rosenfeld (DE)
(72) Erfinder: KRUMM, Achim, 72348 Rosenfeld (DE)
(74) Vertreter: Paustian & Partner Patentanwälte mbB

(56) Entgegenhaltungen:
- EP-B1- 1 236 594
- AU-A4- 2021 107 013
- CN-A- 116 638 937
- DE-C- 616 300
- DE-U1- 202011 051 110
- DE-U1- 8 532 307
- US-A1- 2016 047 387

## Beschreibung

Die vorliegende Erfindung bezieht sich auf Fahrzeugluken. Insbesondere bezieht sich die vorliegende Erfindung auf eine (Fahrzeug-)Dachlukenlüftervorrichtung.

Fahrzeugdachluken werden herkömmlicherweise im Fahrzeugbau eingesetzt, wenn ein (wieder-)verschließbarer Zugang zu einem Fahrzeuginnenraum zumeist in einem Fahrzeugdach geschaffen werden soll. Dabei werden Fahrzeugdachluken oft mit einem transparenten Einsatz wie Kunststoff oder Glas versehen um z.B. bei Campingfahrzeugen Licht ins Innere des Fahrzeugs zu lassen. Oftmals ist eine Zwangsbelüftung wünschenswert, wobei Dachluken mit festverbauten Ventilatoren versehen sind, die z.B. im Badbereich zum Einsatz kommen. Jedoch können hier die Ventilatoren bzw. Lüfter bei Bedarf nicht entfernt werden. Weiterhin kann eine Zwangsbelüftung auch für Fahrzeugdachluken in anderen Bereichen interessant sein, wenn z.B. wenig Wind außerhalb des Fahrzeuges herrscht und daher wenig natürliche Luftzirkulation im Fahrzeuginneren erreicht werden kann. Bekannte Fahrzeugdachluken sind jedoch nur schwierig mit Lüftern zu versehen und diese erreichen auch keine zufriedenstellende Wirkung. Vorrichtungen aus dem Stand der Technik werden in Dokumenten US2016/047387A1, AU2021107013A4, DE202011051110U1 und DE8532307U1 offenbart.

Die vorliegende Anmeldung hat es daher zur Aufgabe eine Dachlukenlüftervorrichtung bereit zu stellen, welche ein effizientes Lüften vermittels eines Lüfters ermöglicht, gleichzeitig den Lichteinfall nicht behindert und eine Bedienbarkeit der Dachluke erhält. Dies wird durch die Gegenstände der unabhängigen Ansprüche erreicht.

Erfindungsgemäß umfasst eine Dachlukenlüftervorrichtung einen Lüfter, eine Steuerung und ein Schott. Der zumindest eine Lüfter und die Steuerung sind am Schott angeordnet. Dies kann den Vorteil haben, dass eine kompakte Vorrichtung erlangt wird, die einfach bedienbar ist.

Erfindungsgemäß ist der Lüfter mit der Dachlukenlüftervorrichtung schwenkbar verbunden. Dies kann den Vorteil haben, dass der Lüfter immer optimal betrieben werden kann. Selbst wenn handelsübliche Lüfter in beide Drehrichtungen arbeiten können (saugen und blasen), so ist zumeist die Förderleistung des Lüfters in einer der Drehrichtungen deutlich schlechter als in der anderen. Daher kann über einen schwenkbaren Lüfter der Lüfter mechanisch so geschwenkt werden, dass er immer optimal arbeiten kann und/oder ein günstiger Lüfter mit nur einer Drehrichtung verbaut werden kann. Wenn z.B. Luft von außen in das Fahrzeuginnere über die Fahrzeugluke gesaugt werden soll, in welchem die Dachlukenlüftervorrichtung verbaut ist, dann kann der Lüfter so geschwenkt werden, dass die optimale Drehrichtung so wirkt, dass Luft optimal ins Fahrzeuginnere gefördert wird. Wenn Luft aus dem Fahrzeuginneren ins Freie gefördert werden soll, dann kann der Lüfter so geschwenkt werden, dass die optimale Drehrichtung so wirkt, dass Luft optimal aus Fahrzeuginnere gefördert wird.

Nach einem weiteren Aspekt der vorliegenden Anmeldung umfasst das Schott der Dachlukenlüftervorrichtung eine im Schott angeordnete Bedienungsklappe. Dies kann den Vorteil haben, dass z.B. ein Bediengriff einer Dachluke bedient werden kann.

Nach einem weiteren Aspekt der vorliegenden Anmeldung ist der Lüfter der Dachlukenlüftervorrichtung in der Bedienungsklappe angeordnet. Dies kann den Vorteil haben, dass die Bedienklappe maximal groß gestaltet werden kann, ohne Einschränkungen z.B. bei der Anordnung bzw. Positionierung des Lüfters eingehen zu müssen. Der Lüfter kann auch direkt im Schott angeordnet werden.

Nach einem weiteren Aspekt der vorliegenden Anmeldung ist der Lüfter bezüglich seiner Ecken schwenkbar. Dies kann insbesondere eine Schwenkung zwei diagonal gegenüberliegende Ecken umfassen. Die Schwenkbarkeit bezüglich der Ecken kann den Vorteil haben, dass die Kabelführung für die Stromversorgung des Lüfters optimal gestaltet werden kann. Wenn ein von der Bauart runder Lüfter verbaut wird, dann verläuft die Schwenkachse bevorzugt in der Nähe eines Stromkabels des Lüfters. Grundsätzlich ist es vorteilhaft die Schwenkachse so zu wählen, dass sie in der Nähe eines Stromkabels des Lüfters verläuft.

Nach einem weiteren Aspekt der vorliegenden Anmeldung umfasst das Schott einer Dachlukenlüftervorrichtung weiterhin eine Bedienöffnung. Dies kann den Vorteil haben, dass z.B. eine mit einer Dachluke verbundene Gasdruckfeder bedient werden kann.

Nach einem weiteren Aspekt der vorliegenden Anmeldung umfasst eine Dachlukenlüftervorrichtung eine Stromversorgung, welche am Schott angeordnet ist. Die Stromversorgung kann eine aufladbare Stromversorgung wie z.B. eine Powerbank sein. Dies kann den Vorteil haben, dass keine aufwändige Stromversorgung fahrzeugseitig vorgesehen werden muss.

Nach einem weiteren Aspekt der vorliegenden Anmeldung umfasst die Dachlukenlüftervorrichtung eine Lüfterarretiervorrichtung. Die Lüfterarretiervorrichtung verhindert das versehentliche Schwenken des Lüfters z.B., wenn das Fahrzeug in dem die Dachlukenlüftervorrichtung verbaut ist über unebenes Terrain fährt bzw. Stößen durch Wellen ausgesetzt ist.

Nach einem weiteren Aspekt der vorliegenden Anmeldung ist die Lüfterarretiervorrichtung mehrteilig und zumindest ein Teil der Lüfterarretiervorrichtung ist am Lüfter angeordnet. Dies kann den Vorteil haben, dass die Lüfterarretiervorrichtung einfacher zu bedienen ist.

Nach einem weiteren Aspekt der vorliegenden Anmeldung ist das Schott einer Dachlukenlüftervorrichtung dazu vorgesehen und geeignet in eine Dachluke eingesetzt zu werden und deren Dachlukenöffnung zumindest teilweise abzuschotten. Dies kann den Vorteil haben, dass der Lüfter effizienter arbeiten kann, da das Schott verhindert, dass der Lüfter Luft "im Kreis" fördert. Das bedeutet, das Schott verhindert, dass der Lüfter bereits geförderte Luft wieder ansaugt.

Nach einem weiteren Aspekt der vorliegenden Anmeldung ist das Schott einer Dachlukenlüftervorrichtung in seiner Transparenz steuerbar. Die Steuerung der Transparenz kann ein umschalten zwischen transparent und opak sein. Darüber hinaus kann es zusätzlich noch ein Abdunkeln umfassen. Dies kann den Vorteil haben, dass die Transparenz des Schotts und damit letztendlich der Dachluke einfach und situationsbedingt angepasst werden kann.

Nach einem weiteren Aspekt der vorliegenden Anmeldung umfasst eine Dachlukenlüftervorrichtung weiterhin eine Beleuchtung. Die Beleuchtung kann mit dem Lüfter kombiniert sein. Dies kann den Vorteil haben, dass auch bei Dunkelheit außerhalb eines Fahrzeugs die Position der Fahrzeugluke mit der Dachlukenlüftervorrichtung als Lichtquelle genutzt werden kann.

Nach einem weiteren Aspekt der vorliegenden Anmeldung umfasst die Dachlukenlüftervorrichtung weiterhin zumindest eine an der Bedienungsklappe angeordnete Verriegelung. Dies kann den Vorteil haben, dass ein unbeabsichtigtes Öffnen der Bedienungsklappe verhindert werden kann.

Nach einem Aspekt der vorliegenden Anmeldung umfasst eine Dachlukenlüfteranordnung eine Dachlukenlüftervorrichtung, eine Dachluke und eine Rollovorrichtung. Die Dachlukenlüftervorrichtung wird durch die Rollovorrichtung an der Dachluke gehalten. Alternativ oder zusätzlich ist die Dachlukenlüftervorrichtung zwischen der Rollovorrichtung und der Dachluke angeordnet. Dies kann den Vorteil haben, dass die Dachlukenlüftervorrichtung einfach und benutzerfreundlich montiert werden kann, ohne dass Befestigungen an der Rollovorrichtung oder der Dachluke vorgesehen werden müssen.

Zum besseren Verständnis der Erfindung wird diese anhand der nachfolgenden Figuren näher erläutert. Sie zeigen jeweils in stark vereinfachter, schematischer Darstellung eine Ansicht einer Dachlukenlüftervorrichtung und einer Dachlukenlüfteranordnung.

Einführend sei festgehalten, dass die in der Beschreibung gewählten Lageangaben, wie z.B. oben, unten, seitlich usw. auf die unmittelbar beschriebene sowie dargestellte Figur bezogen sind und es sind diese Lageangaben bei einer Lageänderung sinngemäß auf die neue Lage zu übertragen.
Figur 1 zeigt eine schematische Darstellung einer Dachlukenlüftervorrichtung in der Draufsicht.
Figur 2 zeigt schematische Schnittdarstellungen von Dachlukenlüfteranordnungen.

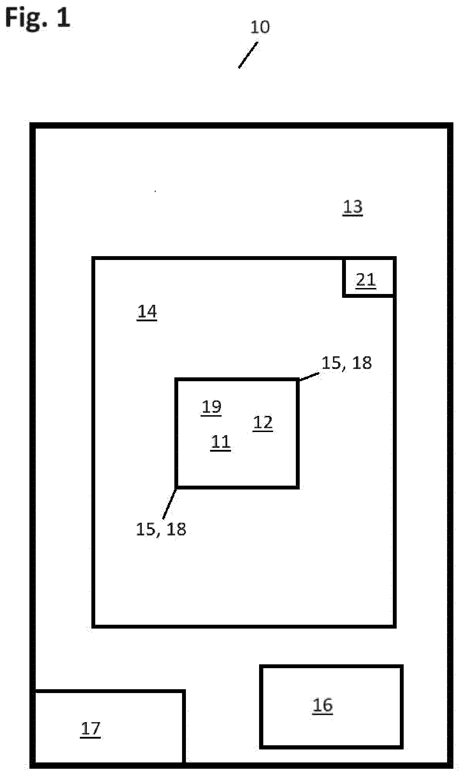

Unter anfänglicher Bezugnahme auf Fig. 1 ist eine Dachlukenlüftervorrichtung 10 dargestellt, welche einen Lüfter 11 mit einer Steuerung 12, ein Schott 13, eine Bedienungsklappe 14, eine Bedienungsöffnung 17 und eine Stromversorgung 16 umfasst.

Der Lüfter 11 hat eine integrierte Steuerung 12, welche auch separat vom Lüfter sein kann. Das Schott 13 ist transparent, kann jedoch mit z.B. einer Folie versehen und/oder aus einem Material gefertigt sein, welche/welches bei Anlegen oder Abfallen von elektrischer Spannung abdunkelt und/oder opak wird. Die Bedienungsklappe 14 ermöglicht ein Bedienen einer Dachluke (nicht gezeigt) an welche die Dachlukenlüftervorrichtung 10 montiert ist, z.B. das Bedienen von Hebeln zum Öffnen der Dachluke. Die optionale Bedienungsöffnung 15 kann ein Bedienen eines z.B. Ausstellers ermöglichen, welcher die Dachluke in einer gewünschten Position hält (beides nicht gezeigt). Die Bedienungsöffnung 15 kann ebenfalls mit einer Klappe versehen werden, wenn ihre Öffnung zu groß wird und dadurch die Luftströmung bzw. die Schottwirkung des Schotts 13 negativ beeinflusst. Dies ist auch der Grund für die Bedienungsklappe 14, da somit ein Bedienen einer Dachluke und gleichzeitig ein optimaler Luftstrom bzw. eine optimale Schottwirkung ermöglicht wird. Der Lüfter kann in der Bedienungsklappe 14 oder direkt im Schott 13 angeordnet werden.

In der gezeigten Ausführungsform umfasst die Dachlukenlüftervorrichtung 10 eine Stromversorgung 16, welche auf dem Schott 13 angeordnet ist. Dies kann z.B. eine Powerbank sein. Weiterhin kann die Stromversorgung 16 auch durch eine externe Stromversorgung (nicht gezeigt) ersetzt werden, wie z.B. ein Stromversorgungskabel, welches mit dem Lüfter 11 bzw. der Steuerung 12 verbunden ist und z.B. an einer festverbauten Steckdose im Bereich der Dachluke (nicht gezeigt) angesteckt werden kann. Der Lüfter 11 umfasst in gezeigten Ausführungsbeispiel die Beleuchtung 19. Die Beleuchtung 19 ist optional und kann separat vom Lüfter 11 angeordnet sein.

Der Lüfter 11 ist über seine Ecken 15 schwenkbar. Hier verläuft die Schwenkachse durch die beiden in Fig. 1 mit dem Bezugszeichen 15 gekennzeichneten diagonal gegenüberliegenden Ecken. Weiterhin sind an den Ecken 15 jeweils Lüfterarretiervorrichtungs 18 angeordnet, die ein unbeabsichtigtes Schwenken des Lüfters 11 verhindern. Es kann auch nur eine Lüfterarretiervorrichtung 18 vorhanden sein, die auch nicht notwendigerweise an einer der Ecken angeordnet ist. Wenn ein von der Bauart runder Lüfter 11 verbaut wird, dann verläuft die Schwenkachse bevorzugt in der Nähe eines Stromkabels des Lüfters 11.

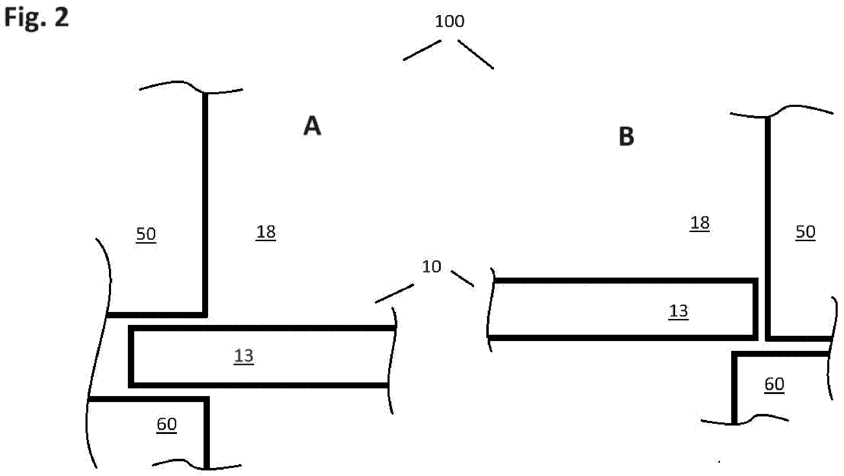

In Fig. 2 sind zwei Varianten A und B einer Dachlukenlüfteranordnung 100 in seitlichen Schnittdarstellungen gezeigt. Der Schnitt verläuft in diesem Fall durch ein Fahrzeugdach (nicht gezeigt) in welches eine Dachluke 50 eingebaut ist. In beiden Varianten ist eine Dachlukenlüftervorrichtung 10 insb. mit dem Schott 13 zwischen einer Rollovorrichtung 60 und die Dachluke 50 mit einer Dachlukenöffnung 20 zwischengeordnet. In Fig. 2 sind jeweils nur Ausschnitte eines Randbereichs gezeigt. Weiterhin sind die Bauteile der Verständlichkeit halber mit Abständen dargestellt, diese sind optional. Die Rollovorrichtung 60 ist ein bekanntes Prinzip in diesem Feld, zumeist umfasst sie eine Verdunklungseinrichtung und ein Moskitonetz. Üblicherweise erstreckt sich die Dachluke 50 rund um eine Dachlukenöffnung 20, sodass eine übliche Schnittkante durch eine Dachplatte (nicht gezeigt) in welche die Dachluke 50 konventionell eingesetzt ist, nicht sichtbar ist.

In der Variante A wird das Schott 13 an die Dachluke 50 und insbesondere die Dachlukenöffnung 20 vermittels der Rollovorrichtung 60 abdeckend gehalten. Vorteilhafterweise wird für diese Art der Anordnung keine separaten Befestigungsstrukturen insb. in der Dachluke 50 benötigt, welche bei ausgebauter Dachlukenlüftervorrichtung 10 möglicherweise den optischen Eindruck beeinträchtigen würden und zudem in der Handhabung nachteilig sein könnten.

Bei Variante B (rechts in der Fig. 2) wird das Schott 13 und damit die Dachlukenlüftervorrichtung 10 ebenfalls vermittels einer Rollovorrichtung 60 gehalten. Allerdings muss hier das Schott 13 durch weitere Strukturen (z.B. Absatz/Anschlag) und/oder geometrische Bedingungen (z.B. Keilform) in der Dachlukenöffnung 20 gehalten werden. Dafür kann hier das Schott 13 in Zusammenspiel mit der Dachluke 50 so gestaltet werden, dass es aus der Anordnung von Dachluke 50 und Rollovorrichtung 60 entnommen werden kann, ohne dass z.B. die Rollovorrichtung 60 demontiert werden muss.

Es sei an dieser Stelle bemerkt, dass die Erfindung nicht auf die speziell dargestellten Ausführungsvariante eingeschränkt ist, sondern Variationsmöglichkeiten bestehen, die im Rahmen des Schutzbereiches der Ansprüche liegen.

Der Schutzbereich ist durch die Ansprüche bestimmt. Die Beschreibung und die Zeichnungen sind jedoch zur Auslegung der Ansprüche heranzuziehen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden. Die Figuren sind daher schematisch und wenn nicht explizit anders angegeben, können keine Größenbezüge aus ihnen abgeleitet werden.

### Bezugszeichenliste

- 10: Dachlukenlüftervorrichtung
- 11: Lüfter
- 12: Steuerung
- 13: Schott
- 14: Bedienungsklappe
- 15: (Lüfter)Ecken
- 16: Stromversorgung
- 17: Bedienöffnung
- 18: Lüfterarretiervorrichtung
- 19: Beleuchtung
- 20: Dachlukenöffnung
- 21: Verriegelung
- 50: Dachluke
- 60: Rollovorrichtung
- 100: Dachlukenlüfteranordnung

## Patentansprüche

1. Dachlukenlüftervorrichtung (10), umfassend einen Lüfter (11), eine Steuerung (12) und ein Schott (13), wobei der zumindest eine Lüfter und die Steuerung am Schott angeordnet sind, **dadurch gekennzeichnet, dass** der Lüfter mit der Dachlukenlüftervorrichtung schwenkbar verbunden ist.

2. Dachlukenlüftervorrichtung (10) nach Anspruch 1, weiterhin umfassend eine im Schott (13) angeordnete Bedienungsklappe (14).

3. Dachlukenlüftervorrichtung (10) nach Anspruch 2, wobei der Lüfter (11) in der Bedienungsklappe (14) angeordnet ist.

4. Dachlukenlüftervorrichtung (10) nach einem der vorangegangenen Ansprüche , wobei der Lüfter (11) bezüglich seiner Ecken (15) schwenkbar ist.

5. Dachlukenlüftervorrichtung (10) nach einem der vorangegangenen Ansprüche, wobei eine Stromversorgung (16) für den Lüfter (11) am Schott (13) angeordnet ist.

6. Dachlukenlüftervorrichtung (10) nach einem der vorangegangenen Ansprüche, weiterhin umfassend eine im Schott (13) angeordnete Bedienöffnung (17).

7. Dachlukenlüftervorrichtung (10) nach einem der vorangegangenen Ansprüche , weiterhin umfassend eine Lüfterarretiervorrichtung (18).

8. Dachlukenlüftervorrichtung (10) nach Anspruch 7, wobei die Lüfterarretiervorrichtung (18) mehrteilig ist und zumindest ein Teil der Lüfterarretiervorrichtung am Lüfter (11) angeordnet ist.

9. Dachlukenlüftervorrichtung (10) nach einem der vorangegangenen Ansprüche, wobei das Schott (13) in seiner Transparenz steuerbar ist.

10. Dachlukenlüftervorrichtung (10) nach einem der vorangegangenen Ansprüche, weiterhin umfassend eine Beleuchtung (19).

11. Dachlukenlüftervorrichtung (10) nach Anspruch 10, wobei die Beleuchtung (19) in den Lüfter (11) integriert ist.

12. Dachlukenlüftervorrichtung (10) nach einem der Ansprüche 2 bis 11, weiterhin umfassend zumindest eine an der Bedienungsklappe (14) angeordnete Verriegelung (21).

13. Dachlukenanordnung (100), umfassend eine Dachluke (50) und eine Dachlukenlüftervorrichtung (10) nach einem der vorangegangenen Ansprüche.

14. Dachlukenanordnung (100) nach Anspruch 13, weiterhin umfassend eine Rollovorrichtung (60)

15. Dachlukenanordnung (100) nach Anspruch 13 oder 14, wobei die Dachlukenlüftervorrichtung (10) entweder durch die Rollovorrichtung (60) an der Dachluke (50) gehalten wird, oder die Dachlukenlüftervorrichtung durch die Rollovorrichtung an die Dachluke montiert wird.

## Claims

1. Roof hatch ventilation device (10) comprising a fan (11), a control (12) and a bulkhead (13), wherein the at least one fan and the control are arranged on the bulkhead, **characterized in that** the fan is pivotably connected to the roof hatch ventilation device.

2. Roof hatch ventilation device (10) according to claim 1, further comprising an operating hatch (14) arranged in the bulkhead (13).

3. Roof hatch ventilation device (10) according to claim 2, wherein the fan (11) is arranged in the operating hatch (14).

4. Roof hatch ventilation device (10) according to one of the preceding claims, wherein the fan (11) is pivotable with respect to its corners (15).

5. Roof hatch ventilation device (10) according to one of the preceding claims, wherein a power supply (16) for the fan (11) is arranged on the bulkhead (13).

6. Roof hatch ventilation device (10) according to one of the preceding claims, further comprising an operating opening (17) arranged in the bulkhead (13).

7. Roof hatch ventilation device (10) according to one of the preceding claims, further comprising a fan locking device (18).

8. Roof hatch ventilation device (10) according to claim 7, wherein the fan locking device (18) is multi-part and at least one part of the fan locking device is arranged on the fan (11).

9. Roof hatch ventilation device (10) according to one of the preceding claims, wherein the bulkhead (13) is controllable in its transparency.

10. Roof hatch ventilation device (10) according to one of the preceding claims, further comprising lighting (19).

11. Roof hatch ventilation device (10) according to claim 10, wherein the lighting (19) is integrated into the ventilator (11).

12. Roof hatch ventilation device (10) according to one of claims 2 to 11, further comprising at least one lock (21) arranged on the operating hatch (14).

13. Roof hatch assembly (100) comprising a roof hatch (50) and a roof hatch ventilation device (10) according to one of the preceding claims.

14. Roof hatch assembly (100) according to claim 13, further comprising a roller blind device (60).

15. Roof hatch assembly (100) according to claim 13 or 14, wherein the roof hatch ventilation device (10) is either held on the roof hatch (50) by the roller blind device (60), or the roof hatch ventilation device is mounted on the roof hatch by the roller blind device.

## Revendications

1. Dispositif d'aération pour lucarne (10) comprenant un ventilateur (11), une commande (12) et une cloison (13), le ventilateur et la commande étant disposés sur la cloison, **caractérisé en ce que** le ventilateur est relié de manière pivotante au dispositif d'aération pour lucarne.

2. Dispositif d'aération pour lucarne (10) selon la revendication 1, comprenant en outre un volet de commande (14) disposé dans la cloison (13).

3. Dispositif d'aération de lucarne (10) selon la revendication 2, le ventilateur (11) étant disposé dans le volet de commande (14).

4. Dispositif d'aération de lucarne (10) selon l'une des revendications précédentes, le ventilateur (11) pouvant pivoter au niveau de ses coins (15).

5. Dispositif d'aération de lucarne (10) selon l'une des revendications précédentes, dans lequel une alimentation électrique (16) pour le ventilateur (11) est disposée sur la cloison (13).

6. Dispositif d'aération pour lucarne (10) selon l'une des revendications précédentes, comprenant en outre une ouverture de commande (17) disposée dans la cloison (13).

7. Dispositif d'aération pour lucarne (10) selon l'une des revendications précédentes, comprenant en outre un dispositif de blocage du ventilateur (18).

8. Dispositif d'aération pour lucarne (10) selon la revendication 7, dans lequel le dispositif de blocage du ventilateur (18) est composé de plusieurs parties et au moins une partie du dispositif de blocage du ventilateur est disposée sur le ventilateur (11).

9. Dispositif d'aération pour lucarne (10) selon l'une des revendications précédentes, la cloison (13) étant réglable en termes de transparence.

10. Dispositif d'aération pour lucarne (10) selon l'une des revendications précédentes, comprenant en outre un éclairage (19).

11. Dispositif d'aération pour lucarne (10) selon la revendication 10, l'éclairage (19) étant intégré dans le ventilateur (11).

12. Dispositif d'aération pour lucarne (10) selon l'une des revendications 2 à 11, comprenant en outre au moins un verrouillage (21) disposé sur le volet de commande (14).

13. Ensemble de lucarne (100) comprenant une lucarne (50) et un dispositif d'aération de lucarne (10) selon l'une des revendications précédentes.

14. Ensemble de lucarne (100) selon la revendication 13, comprenant en outre un dispositif à store (60).

15. Ensemble de lucarne (100) selon la revendication 13 ou 14, dans lequel le dispositif d'aération de lucarne (10) est soit maintenu sur la lucarne (50) par le dispositif à enrouleur (60), soit monté sur la lucarne par le dispositif à enrouleur.
